Europäisches Patentamt

European Patent Office

Office européen des brevets

(11) Numéro de publication: **0 334 754**
**A1**

## (12) DEMANDE DE BREVET EUROPEEN

(21) Numéro de dépôt: **89400799.6**

(22) Date de dépôt: **21.03.89**

(51) Int. Cl.⁴: **G 06 F 1/00**
**H 04 L 11/15**

(30) Priorité: **22.03.88 FR 8803713**

(43) Date de publication de la demande:
**27.09.89 Bulletin 89/39**

(84) Etats contractants désignés:
**BE CH DE ES GB IT LI LU NL SE**

(71) Demandeur: **Marouani, Albert**
**24, Rue de la Platrière**
**F-92140 Clamart (FR)**

**Le Paillier, Rodolphe**
**11, Allée Isabelle**
**F-92140 Clamart (FR)**

(72) Inventeur: **Marouani, Albert**
**24, Rue de la Platrière**
**F-92140 Clamart (FR)**

**Le Paillier, Rodolphe**
**11, Allée Isabelle**
**F-92140 Clamart (FR)**

(74) Mandataire: **Catherine, Alain**
**General Electric France Service de Propriété Industrielle**
**18 Rue Horace Vernet B.P. 76**
**F-92134 Issy-les-Moulineaux Cedex (FR)**

(54) Automate de contrôle de moyens distants en fonction de la signalisation des liaisons de communication.

(57) Dispositif automome pour le contrôle automatique de moyens distants en fonction de la signalisation détectée sur des liaisons de communication. Ce dispositif comprend des moyens de détection A, des moyens de mémorisation et de temporisation B, des moyens de traitement C, des moyens d'activation et de désactivation D, des moyens d'alimentation E, et optionellement des moyens de lecture et d'écriture F, des moyens de supervision des liaisons de communication G, et en D des moyens de détection sensibles aux signaux présents sur les liaisons d'interface d'activation et de désactivation. Sa réalisation électronique peut faire appel à des calculateurs, adopter différents comportements, et gérer plusieurs liaisons de communication différentes. De plus, il peut être doté d'un système d'horodatage.

Une application selon la présente invention concerne l'activation et la désactivation de systèmes serveurs selon leurs principes de fonctionnement.

FIG.1

EP 0 334 754 A1

## Description

## AUTOMATE DE CONTROLE DE MOYENS DISTANTS EN FONCTION DE LA SIGNALISATION DES LIAISONS DE COMMUNICATION.

La présente invention concerne un automate indépendant pour le contrôle automatique de moyens distants, en fonction de la signalisation détectée sur des liaisons de communication.

Aujourd'hui les techniques téléinformatiques ouvrent à l'utilisateur distant un large potentiel au travers des fonctions qu'elles permettent de superviser; la présente invention y trouve un exemple d'application.

Dans le cadre de l'utilisation occasionnelle d'un équipement distant, un problème se pose: c'est la nécessité de le laisser en tout ou partie sous tension, surtout lorsque son taux d'utilisation est faible. En effet, outre la consommation énergétique que cela implique, il faut tenir compte de l'usure occasionnée ainsi que des risques potentiels, par exemple les risques de surtension. La durée de vie des équipements en est affectée et la maintenance sensiblement plus importante. De plus, une réponse appropriée doit apporter les sécurités nécessaires pour des équipements livrés à eux mêmes, sans présence humaine pour la gestion des incidents. Plusieurs solutions ont été proposées, dont deux mentionnées ci-dessous.

Le brevet des Etats-Unis d'Amérique n° 4 647 721 par exemple, concerne un contrôleur relié d'une part à la ligne téléphonique, d'autre part à un ordinateur au travers d'une interface sophistiquée. Le tout obéit à une interaction directe et nécessite une prise en compte spécifique du contrôleur de puissance par l'ordinateur lui-même.

Le brevet WO-A-8 602 797 exploite les signaux d'interface RS 232 du modem ou directement les détections de sonnerie et de prise de ligne téléphonique pour commander la mise sous tension et hors tension des équipements. Les méthodes décrites y sont rigides et figées par l'établissement d'une relation directe, de cause à effet à partir des signaux détectés.

Ces solutions ne sont pas pleinement satisfaisantes car elles gèrent les appels entrants un à un, sans établir de relation entre eux, et peuvent conduire à des cycles de mise sous tension et hors tension fréquents, gravement préjudiciables aux équipements. De plus, l'absence de prise en compte de l'élément temps ne permet pas d'assurer la surveillance de ligne souhaitée (par exemple: prise de ligne, libération de ligne, utilisation de ligne et succession des appels), ni la gestion des incidents, pour répercuter les actions appropriées indépendamment et sans présence humaine, sur les équipements. Le mode de connexion est complexe, voire impossible, si le fonctionnement repose sur des signaux d'un modem, quand celui-ci est inaccessible ou absent. Enfin, les risques sont multipliés et le contrôle est très dégradé si, en plus de son rôle, l'équipement est mis à contribution.

La présente invention concerne un automate de contrôle de moyens distants qui répond à ces objectifs. Il comporte pour celà des moyens de détection de la signalisation, des moyens de mémorisation et de temporisation, des moyens de traitement automomes, des moyens d'activation et de désactivation pour contrôler les moyens distants, et optionnellement des moyens de supervision des liaisons de communication et des moyens de lecture et d'écriture vers l'utilisateur. Son principe repose sur la détection de la signalisation des liaisons de communication et par sa prise en compte: présente et gérée en temps réel, passée et mémorisée, et future dans le cadre d'une anticipation. Elle permet de contrôler l'état de moyens distants de façon automome grâce à une unité de décision indépendante, par un appareil simple dans son principe et dans ses connexions qui répond aux exigences requises en l'absence de surveillance humaine. Le recours à cet appareil se fait sans impact sensible sur des opérations déjà prévues pour des équipements laissés en permanence sous tension.

La suite de la description se réfère aux figures de 1 à 17 annexées qui représentent respectivement: figure 1 le schéma de principe de l'automate selon la présente invention, figures 2 l'utilisation d'un automate selon la présente invention dans le cadre d'un serveur, figure 3 le diagramme des états d'un automate associé à ce serveur, figure 4 une vue d'ensemble de la réalisation électronique détaillée dans les figures 5 à 16, figure 5 l'unité A, figure 6 l'unité B, figure 7 la sous-unité C1, figure 8 la sous-unité C2, la figure 9 la sous-unité C3, figures 10 la sous-unités C4, figure 11 la sous-unité C5, figures 12 la sous-unité C6, figure 13 l'unité D, figure 14 l'unité E, figure 15 l'unité F, figure 16 l'unité G de cette réalisation, figure 17 le schéma de base d'une réalisation de l'automate selon la présente invention, à l'aide d'un calculateur.

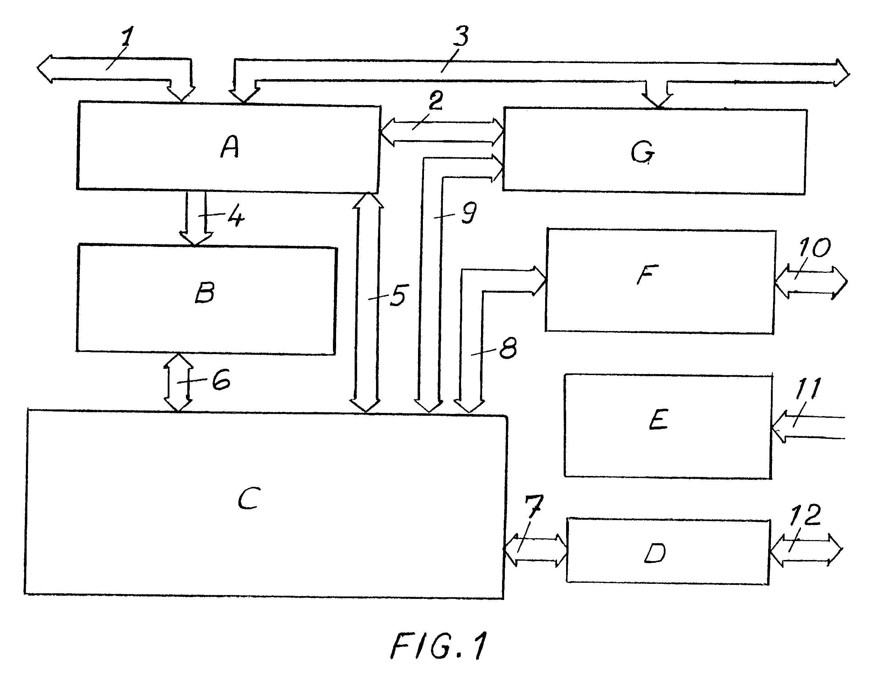

Le schéma de principe de l'automate selon la présente invention est représenté sur la figure 1. On y trouve des moyens de détection A, des moyens de mémorisation et de temporisation B, des moyens de traitement C, au moins un interrupteur en D, une alimentation E et, optionnellement en F des moyens de lecture et d'écriture vis à vis de l'extérieur, et en G des moyens de supervision de liaisons de communication. On code par 1 les liaisons de communication entrantes, par 3 les liaisons de communication vers l'exploitation, et par 2 les liaisons de communication internes utiles uniquement lorsque les moyens G sont présents.

L'automate indépendant selon la présente invention est relié exclusivement à des liaisons de communication entre les entrées 1 et leurs exploitations 3, pour le contrôle selon un comportement prédéfini d'au moins un moyen distant. Il est de plus caractérisé en ce qu'il comprend:
- des moyens de détection A reliés aux liaisons de communication 1 et 3, de manière insensible aux données transportées sur lesdites liaisons, mais sensible à la signalisation pour y détecter des états et des événements qui s'y produisent, pour engendrer des signaux et les fournir par 4 à des moyens de mémorisation et de temporisation B,
- et des moyens de traitement C qui contrôlent par 5, des signaux directement issus des moyens de détection A et, par 6 les signaux mémorisés et temporisés des moyens de mémorisation et de temporisation B, et les traitent en fonction de modalités préétablies, pour contrôler par 7 en D ledit ou lesdits moyens distants au travers de 12.

Un autre automate selon la présente invention correspond à la description précédente, et est également caractérisé en ce qu'il comprend en outre, reliée par 10 une interface d'écriture et de lecture F permettant de lire, d'établir ou de modifier les modalités préétablies des moyens de traitement C au travers de 8.

D'autres automates selon la présente invention correspondent à l'une des descriptions précédentes et sont aussi caractérisés:
- en ce qu'ils comprennent un moyen de supervision G qui est contôlé par 9 par les signaux des moyens de traitement C, et qui en fonction de ces signaux gèrent indépendamment de l'utilisateur les états et événements des liaisons de communication entrantes et sortantes 2 et 3 (les liaisons internes 2 pour ce type d'automate sont nécessaires),
- ou en ce qu'ils sont reliés à plusieurs lignes différentes de communication,
- ou en ce qu'ils utilisent les moyens de détection A pour permettre le contrôle en retour des moyens distants sur l'automate même, via les mêmes liaisons de communication,
- ou en ce qu'ils comprennent en outre, en D des moyens de détection sensibles aux signaux présents aux bornes 12 des moyens de contrôle D, pour fournir aux moyens de traitement C via 7 les détections des signaux entrants en 12.

L'automate selon la présente invention peut être réalisé par un développement totalement électronique, ou faire appel à un ou plusieurs calculateurs programmables. Aussi, après la description des principes de fonctionnement de l'automate selon la présente invention, nous décrirons une réalisation totalement électronique, puis dans ses grandes lignes une autre réalisation faisant appel à un calculateur programmable.

Partant de la signalisation des liaisons de communication, le fonctionnement de l'automate selon la présente invention repose sur la définition des états et des évènements qu'il connait en entrée, de ses sorties, de son ou ses comportements, profils et décors. On utilise dans ce document la terminologie état, évènement, sortie, profil, décor, contrôle en retour, avec les significations définies et illustrées ci-dessous.

Les états en entrée. On peut citer par exemple les états suivants: (i) les états de chaque liaison de communication reconnus au travers de la signalisation (principalement libre, occupée, en dérangement), (ii) les états des temporisations et des mémoires internes, (iii) les états de sortie de l'automate lui-même.

Les évènements en entrée. On peut citer par exemple les évènements suivants:
- au niveau des moyens de détection de la signalisation de chaque liaison de communication: (i) l'appel avec ou sans comparaison à un seuil (par exemple une durée ou un nombre de sonneries), (ii) la transition liaison libre / liaison occupée avec ou sans comparaison à un seuil qui précède cette transition en cas d'appel entrant, (iii) la transition début d'appel / fin d'appel sans établissement de liaison en cas d'appel entrant, avec ou sans comparaison à un seuil, (iv) les transitions à l'initiative desdits moyens distants, (v) la transition de libération de liaison(s) de communication à l'initiative de l'appelant ou desdits moyens distants,
- en interne: (i) chaque temporisation armée venant à sa fin, (ii) la mise sous tension ou hors tension de l'automate, (iii) les évènements que l'automate déclenche lui-même en sortie,
- la détection de signaux venant desdits moyens distants, y compris lorsque ceux-ci ne sont pas attribuables à l'automate.

Le contrôle en retour. On nomme contrôle en retour la méthode généralisable de rétro-action desdits moyens distants vers l'automate, sur les mêmes liaisons de communication. Un équipement terminal peut ainsi rapporter à l'automate tout type d'information et l'amener à réagir selon des modalités prédéfinies.

Les sorties. On définit par exemple, pour l'automate selon la présente invention, les sorties suivantes:
- les signaux de contrôle pour l'activation et la désactivation des moyens distants,
- la gestion possible des liaisons de communication comme: (i) la transparence par rapport à la liaison de communication, (ii) la prise de la liaison de communication par l'automate, (iii) l'appel sur la liaison de communication,
- le pilotage des temporisations internes à l'automate: (i) l'activation de temporisations, (ii) la réactivation de temporisations, (iii) la désactivation de temporisations,
- l'écriture dans ses mémoires.

Les comportements. Le comportements de l'automate est défini par les relations de cause à effet, à partir d'évènements rencontrés dans des configurations d'états. Il est alors possible de dresser une liste des clauses, énumérées sous la forme "sortie est fonction de évènement dans une configuration d'états" notées:

sortie = fonction (évènement,états),

et de construire un comportement au travers d'une table de décision en trois colonnes: évènements, états, sorties, avec pour chaque évènement à considérer la possibilité d'avoir chacune des N configurations d'états possibles, donc N possibilités de sorties. Dans le cas de M évènements et de N états; on pourra avoir jusqu'à M x N lignes, donc jusqu'à M x N sorties possibles. Bien évidemment, ce nombre maximum est théorique, la réalité permettant souvent des regroupements simplificateurs.

Les profils. Pour une même table de décision, différents profils correspondent à différentes gammes de valeurs affectées aux paramètres, par exemple différentes durées de temporisations.

Les décors. Différentes tables de décision définissent pour l'automate différents décors.

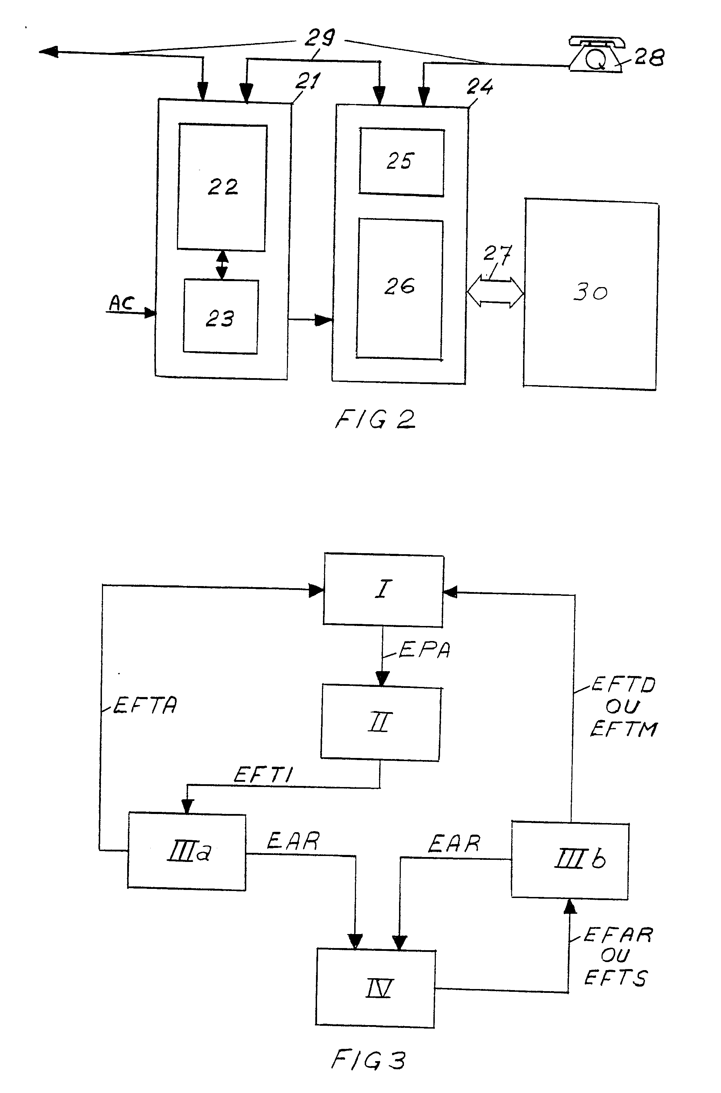

La réalisation dont la description suit illustre un comportement d'un automate selon la présente invention. La figure 2 schématise son utilisation dans le cadre d'un serveur télématique. Nous trouvons ce serveur en 24 avec son modem en réponse automatique en 25 et l'ordinateur serveur en 26. L'automate en 21 comprend des moyens de fonctionnement en 22 et, en 23 un interrupteur d'activation et de désactivation de l'unité 24. L'unitée 27 peut éventuellement être connectée au serveur, elle représente ici un interface domotique de gestion de l'environnement.

La figure 3 décrit le diagramme des états de cet automate. Dans l'état I de cette figure, le serveur est maintenu hors tension. Après une détection de sonnerie nommée EPA (évènement premier appel), l'automate entre dans l'état II. Cet état transitoire correspond au délai de mise en route du serveur. Le passage de la ligne téléphonique est alors inhibé jusqu'à la sortie de cet état par l'évènement EFTI (évènement fin de temporisation d'inhibition) ce qui fait passer l'automate dans l'état IIIa. La sortie normale de cet état IIIa résulte d'un appel reconnu alors comme EAR (évènement appel réussi) qui fait passer à l'état IV. Dans le cas où l'on ne rencontre pas d'EAR avant une temporisation dite d'activation démarrée par l'EPA, l'EFTA (évènement de fin de temporisation d'activation) repositionne l'automate dans l'état I, hors tension. L'état IV correspond au déroulement d'une session de communication entre le serveur et un utilisateur distant. L'automate quitte l'état IV pour passer dans l'état de nouvelle disponibilité IIIb soit à la fin d'une session EFAR (évènement fin d'appel réussi) soit, par sécurité, si la session dépasse une durée préétablie: évènement EFTS (évènement de fin de session). L'état IIIb peut conduire soit à une nouvelle session par un nouvel EAR, soit au retour à l'état I résultant de deux clauses possibles: l'évènement de fin de disponibilité EFTD ou, par sécurité, l'évènement de fin de mise sous tension maximale pour un cycle complet de l'automate EFTM. Dans le cas de cette réalisation, les temporisations relatives à EFTS et EFTM sont infinies, et les temporisations TI, TA et TD relatives respectivement à EFTI, EFTA et EFTD peuvent être sélectionnées sur des plages comprises respectivement entre 4 et 512 secondes, 16 et 2048 secondes et 16 et 2048 secondes. Les unités D et G sont réduites à de simples relais de commutation.

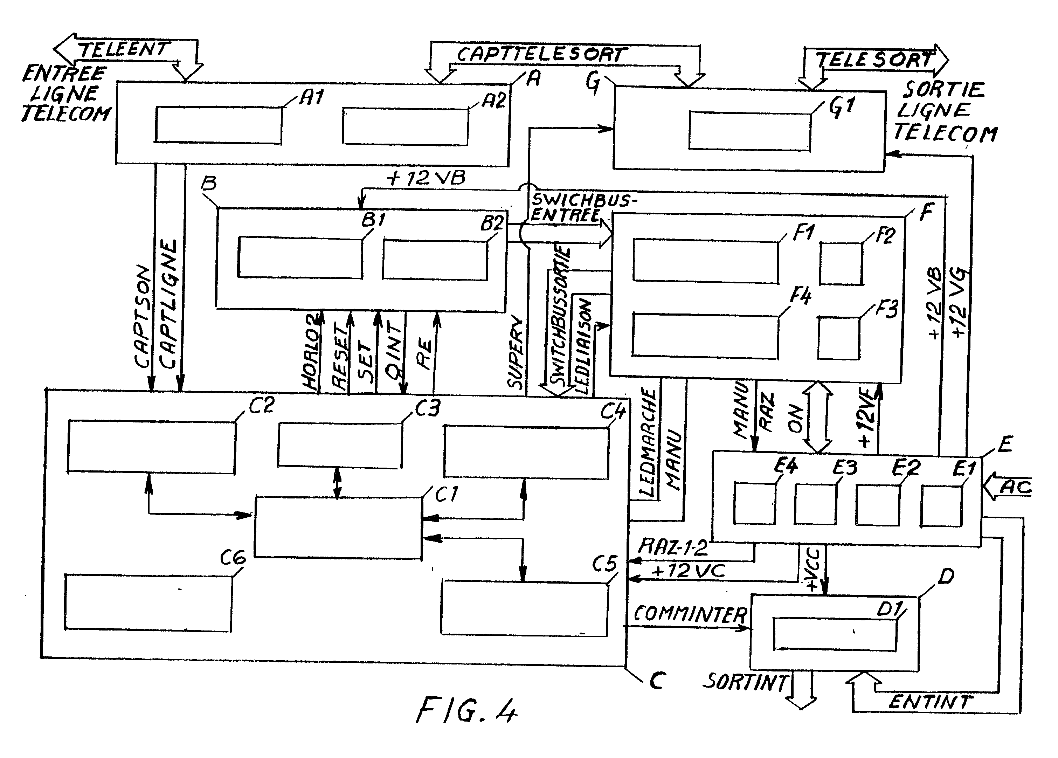

La figure 4 représente le schéma de principe de cette réalisation. On y retrouve les unités A, B, C, D, E, F et G avec respectivement les fonctions décrites précédemment pour la figure 1.

Pour simplifier la lecture des figures qui suivent, nous faisons précéder les identifications des composants par les codes suivants: D pour diode, R pour résistance, C pour capacité, IC pour circuit intégré, VR pour varistance, ES pour porte électronique, RL pour relais, T pour transistor, TR pour transformateur, SW pour interrupteur, FU pour fusible, N pour inverseur ou porte logique. Ces codes sont suivis du nom de la sous-unité puis d'une lettre alphabétique.

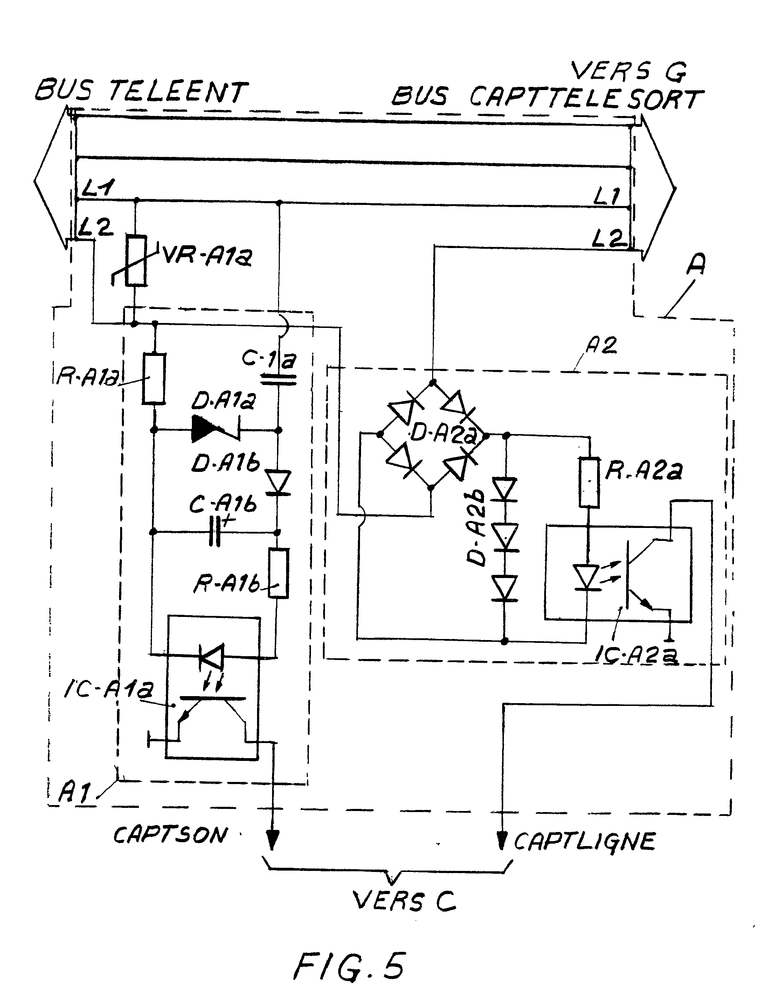

La figure 5 décrit les moyens de détection A constitués de deux sous-unités A1 et A2. A1 détecte la sonnerie, et est composée de l'opto-coupleur IC-A1a, des composants D-A1a,b, C-A1a,b et R-A1a,b. Le signal CAPTSON passe à l'état 0 logique lorsque la sonnerie est détectée. VR-A1a protège des surtensions. A2 détecte la présence d'un courant de ligne signifiant une prise de ligne en aval de l'automate, et est composée de D-A2a,b, R-A2a, et de l'opto-coupleur IC-A2a. Le signal CAPTLIGNE passe à l'état logique 0 lorsqu'un courant de ligne est détecté.

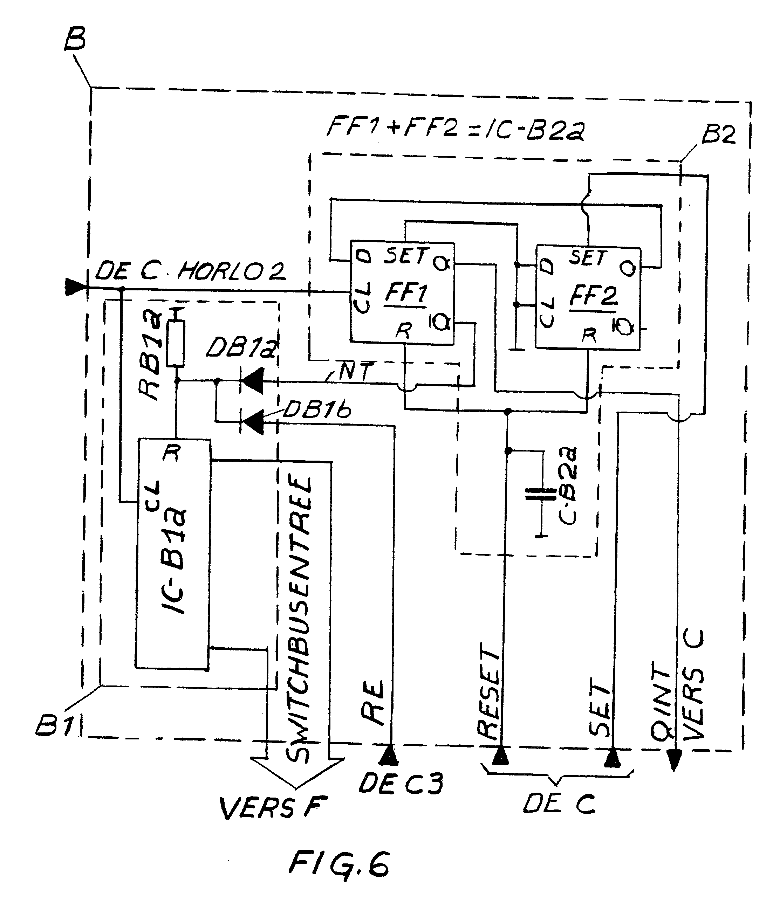

la figure 6 décrit les moyens de mémorisation B constitués des sous-unités B1 et B2. B1 décompte les temporisations par IC-B1a sous le contrôle de la bascule de mémorisation IC-B2a. Les signaux NT et RE, et ceux issus de D-B1a,b et R-B1a inhibent le comptage de IC-B1a dans les états I et IV. C-B2a stabilise les circuits précédents contre des phénomènes de rebond et de parasite.

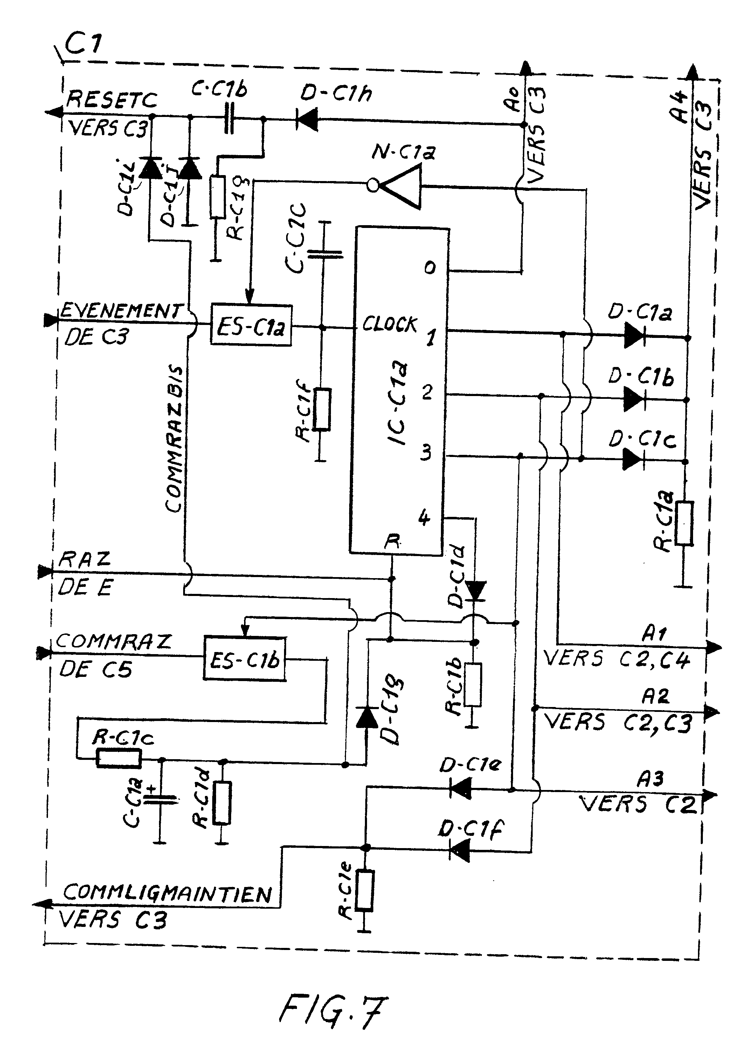

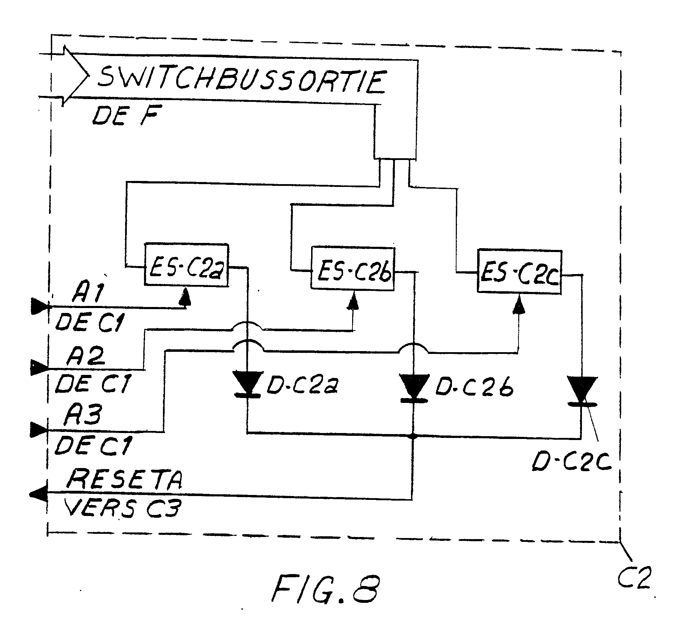

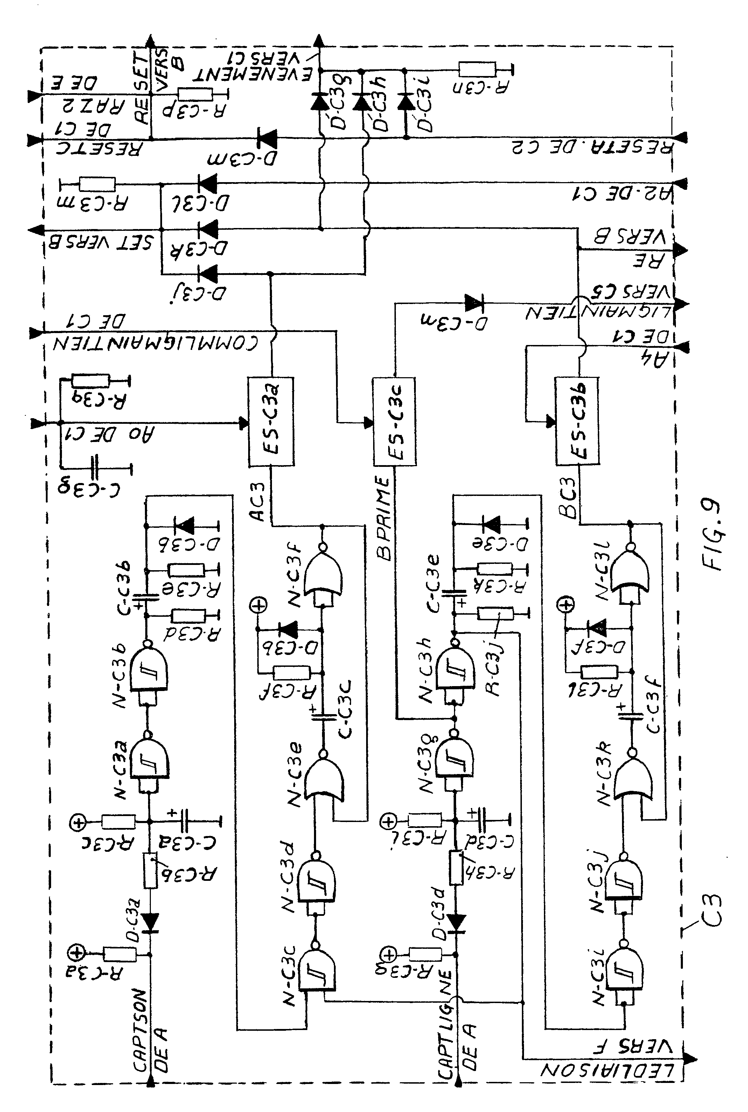

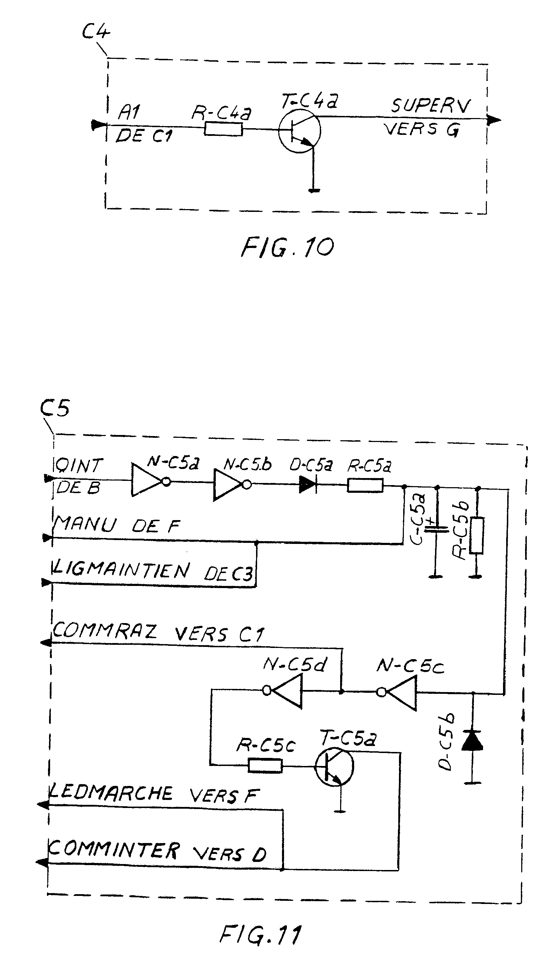

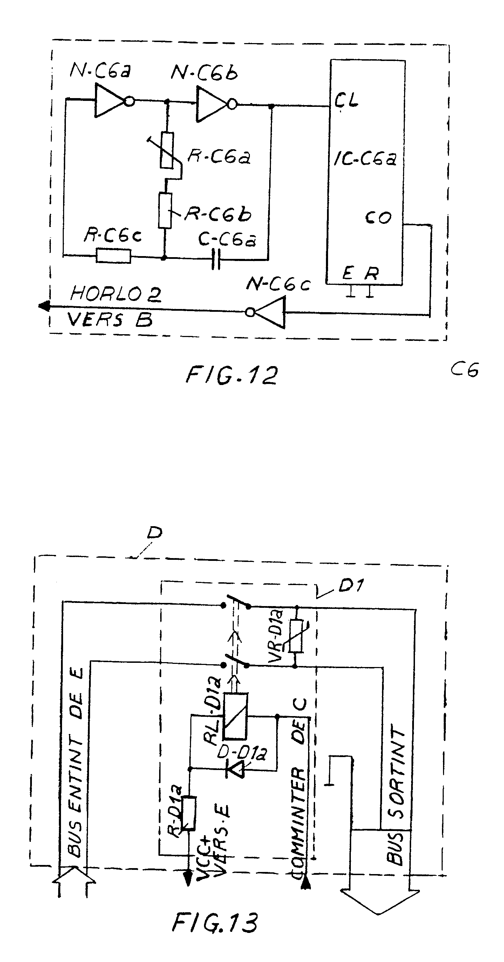

les figures 7 à 12 décrivent les moyens de traitement C constitués des sous-unités C1 à C6. En figure 7, autour du compteur décimal IC-C1a, le séquenceur C1 commute l'ensemble des signaux de l'automate selon les états qu'il connaît, tels qu'ils ont été définis en figure 3. Ainsi, les sorties 0, 1, 2 de IC-C1a correspondent aux états I, II, IIIa et la sortie 3 aux états IIIb et IV. Les autres composants de cette figure 7 permettent la synchronisation de IC-C1a selon le diagramme des états. En figure 8, la sous-unité C2 gére les mémoires et les temporisations TI, TA et TD au travers des portes électroniques ES-C2a,b,c et de D-C2a,b,c et agit sur le séquenceur au travers de C3. En figure 9, la sous-unité C3 produit les signaux RESET de réinitialisation de B, SET pour activer le comptage de B, RE vers l'unité B, EVENEMENT pour incrémenter le séquenceur C1, LIGMAINTIEN vers l'unité C5 et LEDLIAISON vers l'unité F. C3 met également en forme à l'aide des NAND Trigger de Schmidt N-C3a à d et N-C3g à j, des NOR-N-C3e,f,k,l, des diodes D-C3a à f, des résistances R-C3a à l, des condensateurs C-C3a à f, les signaux CAPTSON et CAPTLIGNE. Les portes électroniques ES-C3a,b,c avec les composants associés sélectionnent les signaux d'entrée après leur mise en forme. D-C3g à n et R-C3m,n,p forment les signaux de sortie de C3, sauf LEDLIAISON et RE. On notera que la constante de temps réalisée par R-C3c et C-C3a est supérieure à celle réalisée par R-C3i et C-C3d, ainsi, par N-C3c l'automate évite une activation lorsqu'un décrochement local du téléphone suit un train de sonnerie, dans l'état I. En figure 10, la sous-unité C4 délivre la commande de puissance de l'unité G; elle est composée de T-C4a et R-C4a. En figure 11, la sous-unité C5 contrôle principalement l'unité D grâce à un ensemble logique N-C5a,b,c,d, D-C5a,b, C-C5a, R-C5a,b et à un tampon de puissance R-C5c et T-C5a. En figure 12, la sous-unité C6 élabore le signal d'horloge HORLO2 délivré à l'ensemble de l'automate avec une fréquence d'environ 1 Hertz. C6 est composé d'un oscillateur constitué de N-C6a,b, de R-C6a,b,c, C-C66a, du diviseur par dix IC-C6a et du tampon de sortie N-C6c.

La figure 13 décrit le circuit de commutation du relais RL-D1a d'activation et de désactivation du serveur. VR-D1a protége contre les surintensités de commutation.

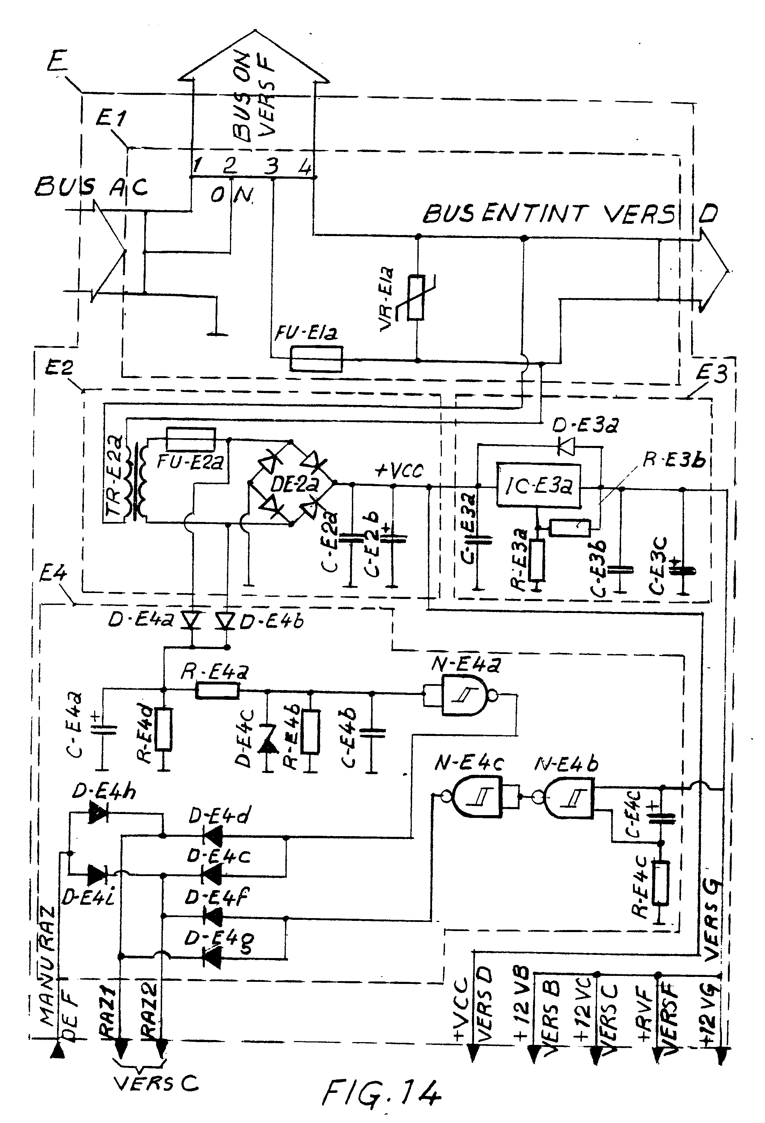

La figure 14 décrit l'unité d'alimentation E constituée des sous-unités E1, E2, E3 et E4. La sous-unité E1 protège contre les surtensions par VR-E1a et FU-E1a, et distribue la tension AC vers la sous-unité E2 et vers l'unité D. La sous-unité E2 abaisse par TR-E2a, redresse par D-E2a et filtre par C-E2a,b la tension AC pour produire +Vcc; elle alimente la sous-unité E3. Celle-ci réalise par IC-E3a, D-E3a, R-E3a,b et C-E3a,b,c un filtrage électronique de +Vcc pour délivrer +12 V DC à l'ensemble de l'automate. La sous-unité E4 génère les signaux de RAZ nécessaires lors des transitoires de mise sous tension et hors tension par les composants: N-E4a,b,c, D-E4a à i, R-E4a à d, et C-E4a à c.

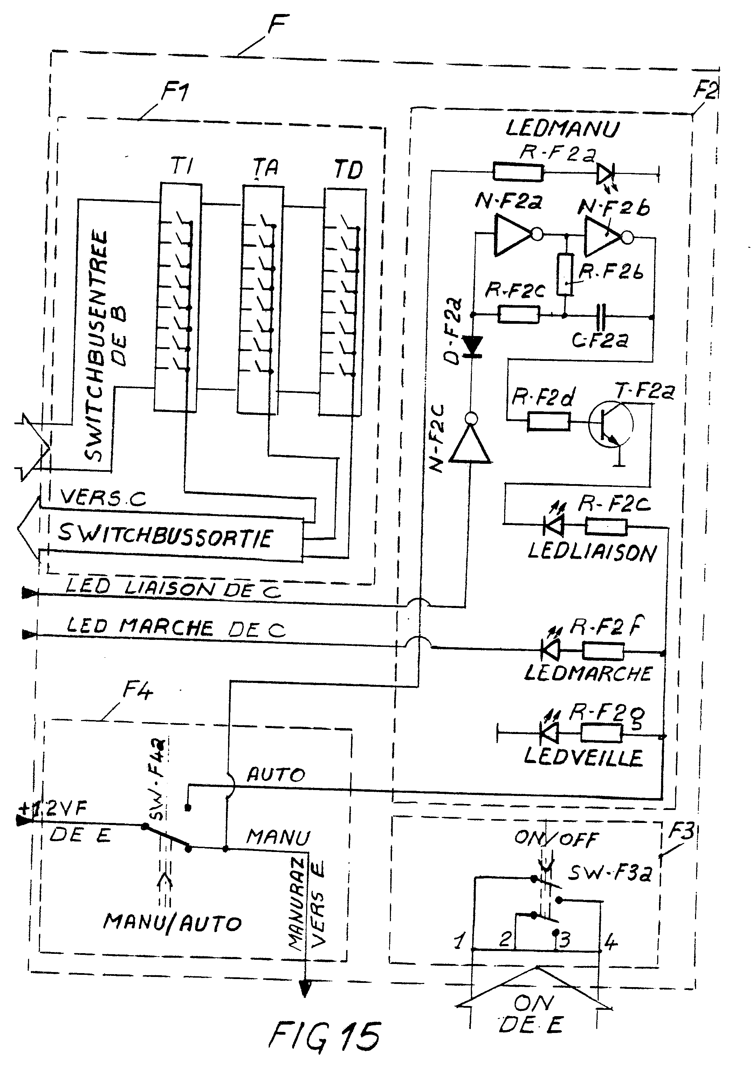

La figure 15 décrit l'interface de paramétrage de l'automate F constituée des sous-unités F1, F2, F3 et F4. Dans la sous-unité F1, les trois ensembles d'interrupteurs ITI, ITA et ITD permettent à l'utilisateur de paramétrer le profil en fonction de la durée des temporisations TI, TA et TD. La sous-unité F2 affiche l'état de l'automate au travers de quatre LED: LEDMANU allumée lorsque l'automate est en mode manuel, LEDLIAISON clignotant lorsqu'une communication est en cours, LEDMARCHE allumée lorsque l'automate délivre AC aux équipements en aval et LEDVEILLE allumée dés que l'automate est en mode automatique. La sous-unité F3 comprend SW-F3a, l'interrupteur général AC. La sous-unité F4 comprend l'interrupteur SW-F4a de sélection du mode automatique ou manuel.

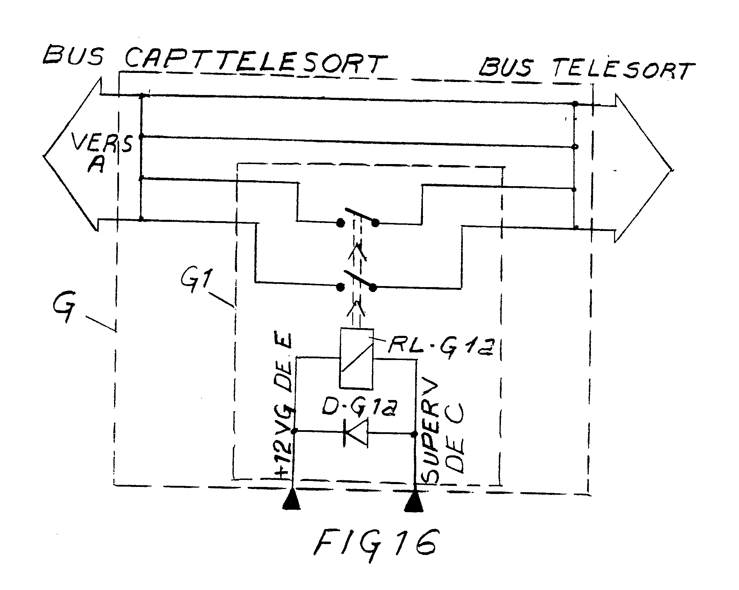

La figure 16 décrit l'unité G de supervision de la ligne téléphonique; elle est constituée de la sous-unité G1 comprenant le relais de commutation de ligne RL-G1a et la diode D-G1a.

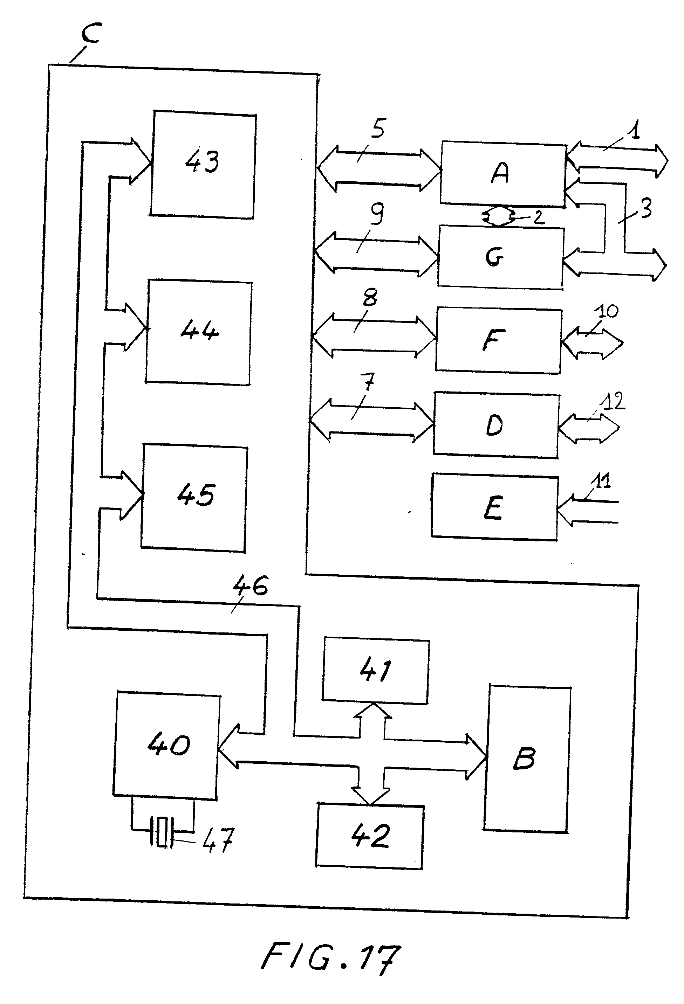

La figure 17 représente le schéma de principe d'une autre réalisation selon la présente invention, à base d'un calculateur. Elle utilise les unités décrites en figure 1 et en 40, un processeur 8 bits de type 6809. Les différentes unités et liaisons y sont codée de 1 à 47.

Dans cette réalisation, l'unité B est intégrée dans la mémoire vive (ou RAM) de l'unité C. Les interfaces d'adaptation ou IA représentées par les codes 43, 44, 45 sur la figure 17, sont constituées de PIA de type 6821 (MC 6821 référence constructeur), ACIA de type 6850 (MC 6850 référence constructeur) et VIA de type 6522 (R 6522 de type constructeur) pour interconnecter les unités A, D, F, et G respectivement par les bus 5, 7, 8 et 9.

L'unité C comprend, outre son calculateur codé 40 cadencé par son quartz codée 47: (i) une mémoire morte nommée ROM base codée 41 utilisant des modules du type EPROM 2764, (ii) plusieurs mémoires mortes nommées ROM décor codées 42 sélectionnables par l'opérateur et/ou par le logiciel pour définir le décor de l'automate, (iii) une mémoire vive RAM B constituée de modules de type CMOS 43256. La mémoire ROM base 41 comprend: (i) la séquence de démarrage nommée INIT pour initialiser le système et optionnellement lancer la routine d'autodiagnostic de l'automate, (ii) les routines primitives de gestion des autres unités via les IA, avec entre autres la gestion des liaisons d'interfaces d'entrée-sorties (série et parallèle), (iii) les routines primitives de gestion des mémoires et des temporisations, (iv) la table d'adressage établissant une relation entre un évènement et l'adresse d'exécution du programme correspondant selon la hiérarchie établie, (v) la séquence d'activation du décor sélectionné. Le bus 46 véhicule entre les modules les signaux de donnée, de commande et d'adresse.

Le principe de fonctionnement de ces réalisations repose sur la gestion automome de la signalisation détectée par l'unité A, mémorisée et temporisée dans l'unité B, traitée selon un comportement prédéfini dans l'unité C, pour piloter au travers de l'unité D des moyens distants. Optionnellement, l'unité G permet de superviser les liaisons de communication, et l'unité F permet un interfaçage avec l'utilisateur.

A titre indicatif, la nommenclature des composants de la réalisation matérielle tout éléctronique décrite ci-dessus sont:

- Pour les circuits intégrés:

| Référence brevet | Référence des composants |
|---|---|
| IC-A1a,b | : 4N25 |
| IC-B1a | : CD 4040 BE |
| IC-B2a | : CD 4013 BE |
| IC-C1a | : CD 4017 BE |
| ES-C1a,b | : CD 4066 BE |
| N-C1a | : CD 4049 BE |
| ES-C2a,b,c | : CD 4066 BE |
| N-C3a,b,c,d,g,h,i,j | : CD 4093 BE |
| N-C3e,f,k,l | : CD 4001 BE |
| ES-C3a,b,c | : CD 4066 BE |
| N-C5a,b,c,d | : CD 4049 BE |
| N-C6a,b,c | : CD 4049 BE |
| IC-E3a | : LM 317 |
| N-E4a,b,c | : CD 4093 BE |
| N-F2a,b,c | : CD 4049 BE |

- pour les transistors:

| | |
|---|---|
| T-C4a | : 2N2222 |
| T-C5a | : 2N1711 |
| T-F2a | : 2N2222 |

- pour les diodes:

| | |
|---|---|
| D-A1a | : Zener 5,6 V / 0,4 W |
| D-A1b | : 1N4007 |
| D-A2a,b | : 1N4007 |
| D-B1a,b | : 1N4148 |
| D-C1a,b,c,d,e,f,g,h,i,j | : 1N4148 |
| D-C2a,b,c | : 1N4148 |
| D-C3a,b,c,d,e,f,g | : 1N4148 |
| D-C3h,i,j,k,l,m,n,p | : 1N4148 |
| D-C5a,b | : 1N4148 |
| D-D1a | : 1N4007 |
| D-E2a | : 1N4007 |
| D-E3a | : 1N4007 |
| D-E4a,b | : 1N4007 |
| D-E4c | : Zener 12V / 0,4 W |
| D-E4d,e,f,g,h,i | : 1N4148 |
| D-F2a | : 1N4148 |
| D-F2b | : 1N4007 |
| D-G1a | : 1N4007 |

## Revendications

1. Automate indépendant sensible à la signalisation relative à une adresse terminale de communication, relié à une liaison de communication entre son arrivée chez l'usager en 1 et son exploitation en 3, doté d'au moins un comportement pour le contrôle c'est à dire l'activation, la désactivation et la surveillance du fonctionnement d'un moyen distant ou d'une famille de plusieurs moyens distants, ledit automate est caractérisé en ce qu'il comprend:- des moyens de détection A reliés exclusivement à la liaison de communication en 1 et 3 de manière insensible aux données transportées sur ladite liaison, mais sensible à la signalisation chez l'usager pour y détecter des états et des èvènements qui s'y produisent, pour engendrer des signaux, et les fournir au besoin par la liaison 4 à des moyens de mémorisation et de temporisation B,

- des moyens autonomes de traitement C qui gèrent par la liaison 5 les signaux issus directement des moyens de détection A, et par la liaison 6 des états mémorisés et des èvènements temporisés en B, et traitent les signaux des liaisons 5 et 6 pour agir au besoin au travers de la liaison 7 sur des moyens d'activation et de désactivation D reliés par la liaison 12 audit moyen distant ou à ladite famille de moyens distants, selon des modalités préétablies dans une table de décision de type "résultat de C est fonction de èvènement dans une configuration d'états",

- et des moyens d'alimentation E automomes ou optionnellement reliés à une source extérieure par la liaison 11, directement exploitable ou adaptée par E, qui desservent l'automate.

2. Automate selon la revendication précédente, caractérisé en outre en ce qu'il comprend au moins un calculateur en 40, au moins une mémoire de base en 41 et au moins une table de décision en 42 permettant de définir pour ledit automate au moins un comportement.

3. Automate selon l'une des revendications précédentes, caractérisé en ce qu'il comprend en outre des moyens de lecture et d'écriture F reliés à l'extérieur par la liaison 10 pour l'administration de son fonctionnement, permettant de lire, d'établir ou de modifier les mémoires et les modalités préétablies des moyens de traitement C, au travers de la liaison 8.

4. Automate selon l'une des revendications précédentes, caractérisé en outre en ce qu'il détecte par A la signalisation relative à plusieurs adresses terminales de communication sur des liaisons de communication telles que par exemple lignes téléphoniques, ou liaisons RNIS, ou encore liaisons par ondes électromagnétiques, pour contrôler indépendamment l'une de l'autre, sur chaque adresse, une famille composée d'un ou de plusieurs moyens distants.

5. Automate selon l'une des revendications précédentes, caractérisé en ce qu'il utilise en outre les moyens de détection A pour permettre la gestion de contrôle en retour des moyens distants vers l'automate via les liaisons de communication 3, pour permettre auxdits moyens distants de rapporter à l'automate des informations, et l'amener à réagir selon des modalités prédéfinies.

6. Automate selon l'une des revendications précédentes, caractérisé en ce qu'en outre, synchronisé dans le temps, il gère un moyen d'horodatage pris en compte dans le fonctionnement des moyens de traitement C, cet automate permet par exemple, dans le cadre du RNIS, de dresser par C et de rendre accessible par F via la liaison 10 une liste horodatée de caractéristiques des appels entrants et sortants que ce mode de communication autorise.

7. Automate selon l'une des revendications précédentes, caractérisé en ce qu'il comprend en outre des moyens de supervision G qui sont gérés via la liaison 9 par les moyens de traitement C, et qui lorsque la liaison de communication n'est pas sollicitée par ailleurs par un appel entrant chez l'usager, agissent sur la signalisation des liaisons de communication entrantes ou sortantes 1 et 3; la liaison interne 2 relie les unités A et G.

8. Automate selon l'une des revendications précédentes, caractérisé en outre en ce que ses moyens de détections A sont reliés en tout ou partie indirectement aux liaisons de communications par des capteurs externes, par exemple magnétiques, électromagnétiques ou optiques.

9. Automate selon l'une des revendications précédentes, caractérisé en ce qu'il comprend en outre en D, des moyens de détection sensibles aux signaux présents sur ses liaisons d'interface 12, pour fournir aux moyens de traitement C via la liaison 7 les détections des signaux de la liaison 12.

FIG.1

EP 0 334 754 A1

FIG 2

FIG 3

FIG.4

BUS TELEENT

VERS G
BUS CAPTTELESORT

L1

L1

L2

L2

A

VR·A1a

A2

R·A1a

C·1a

D·A1a

D·A2a

D·A1b

R·A2a

C·A1b

D·A2b

R·A1b

IC·A2a

IC·A1a

A1

CAPTSON

CAPTLIGNE

VERS C

FIG. 5

FIG.6

FIG.7

FIG.8

FIG.9

EP 0 334 754 A1

C4

A1
DE C1 — R-C4a — T-C4a — SUPERV VERS G

**FIG. 10**

C5

QINT DE B — N-C5a — N-C5b — D-C5a — R-C5a — C-C5a / R-C5b

MANU DE F

LIGMAINTIEN DE C3

COMMRAZ VERS C1

N-C5d — N-C5c

R-C5c — T-C5a

D-C5b

LEDMARCHE VERS F

COMMINTER VERS D

**FIG. 11**

N·C6a    N·C6b

CL

IC·C6a

R·C6a

R·C6b

R·C6c    C·C6a

CO

E R

HORLO 2
VERS B    N·C6c

**FIG.12**    C6

D

D1

VR·D1a

BUS ENTINT DE E

RL·D1a

D·D1a

COMMINTER DE C

BUS SORTINT

R·D1a

VCC+
VERS. E

**FIG.13**

FIG.14

FIG 15

FIG 16

FIG.17

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 602 797 (R.A. OLIVA)<br>* Résumé; page 4, ligne 30 - page 5, ligne 37; figure 1 *<br>--- | 1-3,5,7 ,8 | G 06 F 1/00<br>H 04 L 11/15 |
| A,D | US-A-4 647 721 (V.A. BUSAM et al.)<br>* Colonne 1, ligne 36 - colonne 2, ligne 51; figure 1 *<br>----- | 1,5,7,8 | |

**DOMAINES TECHNIQUES RECHERCHES (Int. Cl.4)**

G 06 F 1
H 04 L 11
H 04 M 11

**Le présent rapport a été établi pour toutes les revendications**

| Lieu de la recherche | Date d'achèvement de la recherche | Examinateur |
|---|---|---|
| LA HAYE | 08-06-1989 | CIARELLI N. |

EPO FORM 1503 03.82 (P0402)